(19) Europäisches Patentamt
European Patent Office
Office européen des brevets

(11) EP 2 022 964 B1

(12) EUROPÄISCHE PATENTSCHRIFT

(45) Veröffentlichungstag und Bekanntmachung des Hinweises auf die Patenterteilung:
**14.12.2011 Patentblatt 2011/50**

(51) Int Cl.:
*F02C 6/12* *(2006.01)*

(21) Anmeldenummer: **08161711.0**

(22) Anmeldetag: **04.08.2008**

(54) **Abgasturbolader und Verfahren zum Betreiben eines Abgasturboladers**

Turbocharger and method of operating a turbocharger

Turbocompresseur à gaz d'échappement et procédé pour faire fonctionner un turbocompresseur à gaz d'échappement

(84) Benannte Vertragsstaaten:
**DE FR GB**

(30) Priorität: **09.08.2007 DE 102007037540**

(43) Veröffentlichungstag der Anmeldung:
**11.02.2009 Patentblatt 2009/07**

(73) Patentinhaber: **Bosch Mahle Turbo Systems GmbH & Co. KG**
**70376 Stuttgart (DE)**

(72) Erfinder: **Laubender, Jochen**
**70439, Stuttgart (DE)**

(74) Vertreter: **BRP Renaud & Partner**
**Rechtsanwälte Notare Patentanwälte**
**Königstrasse 28**
**70173 Stuttgart (DE)**

(56) Entgegenhaltungen:
**DE-A1- 2 843 202       DE-A1- 10 160 934**
**DE-A1-102004 013 232   DE-B- 1 055 882**
**US-A- 4 729 715        US-A1- 2005 247 058**
**US-A1- 2006 034 683**

## Beschreibung

Die Erfindung betrifft einen Abgasturbolader für eine Brennkraftmaschine gemäß dem Oberbegriff des Anspruchs 1 sowie ein Verfahren zum Betreiben eines Abgasturboladers gemäß dem Oberbegriff des Anspruchs 11.

## Stand der Technik

Bei der Aufladung von Brennkraftmaschinen mittels eines Abgasturboladers unterscheidet man zwischen Stau- und Stoßaufladung. Bei der Stauaufladung wird die Druckdifferenz der Abgase vor und hinter der Turbine genutzt, wobei ein möglichst konstanter Abgasdruck vor der Abgasturbine angestrebt wird. Zu diesem Zweck werden im Abgasstrom erzeugte Druckwellen infolge der von den einzelnen Zylindern nacheinander ausgestoßenen Abgaspakete weitestgehend unterdrückt, zum Beispiel durch einen vor der Turbine angeordneten Sammler. Da die Abgasturbine bei der Stauaufladung mit einem nahezu konstanten Druckverhältnis und einem nahezu konstanten Abgasmassenstrom betrieben werden kann, lässt sie sich für einen Betrieb mit hohem Wirkungsgrad optimieren. Nachteilig an der Stauaufladung ist, dass die kinetische Energie der Druckwellen in den Abgaspaketen nur zu einem geringen Teil genutzt und in Arbeit umgesetzt werden kann. Außerdem ist im Teillastbereich der Brennkraftmaschine während der Ventilüberschneidungsphase das Druckgefälle zwischen dem Einlass und dem Auslass der Zylinder sehr gering, was zu einem ungenügenden Ausspülen von Restgas aus den Zylindern führen kann.

Bei der Stoßaufladung wird hingegen die kinetische Energie der von den einzelnen Zylindern ausgestoßenen Abgaspakete genutzt, um die Abgasturbine anzutreiben bzw. zu beschleunigen, wobei zumeist mehrflutige Turbinengehäuse Verwendung finden, durch welche die Abgaspakete aus den einzelnen Zylindern getrennt zur Abgasturbine geführt werden. Bei der Stoßaufladung wird die Abgasturbine wegen der Druckschwankungen im Abgastrakt jedoch nicht immer mit ihrem optimalen Wirkungsgrad betrieben. Außerdem erhöht sich in Betriebspunkten mit hoher Last oder Drehzahl der Abgasgegendruck übermäßig stark. Dadurch wird während des Ausstoßtaktes mehr Arbeit zum Ausschieben des restlichen Abgases aus den Zylindern benötigt, was zu einem erhöhten Kraftstoffverbrauch der Brennkraftmaschine führt. Infolge der starren Kopplung des Turbinenrades mit dem Verdichterrad führen darüber hinaus die Druckschwankungen im Abgastrakt auch zu unerwünschten Druckschwankungen im Saugrohr.

Aus der EP 0 160 460 B1 ist bereits ein Turbolader der eingangs genannten Art mit einer im Abgasstrang angeordneten, von Abgasen der Brennkraftmaschine durchströmten Abgasturbine bekannt, bei dem die Abgase der Brennkraftmaschine durch einen Ringkanal des Turbinengehäuses zum Turbinenrad zugeführt werden. Eine Begrenzungswand des Ringkanals wird dort von einem Düsenring gebildet, an dem eine Vielzahl von in den Ringkanal ragenden Düsenschaufeln drehbar befestigt ist, so dass sich durch Verdrehen der Düsenschaufeln die Geometrie des Ringkanals unter Veränderung der effektiven Fläche des Ringkanals und/oder des Winkels, unter dem die Abgase in das Turbinengehäuse geleitet werden, verändern lässt. Die Veränderung der Geometrie des von den Abgasen durchströmten Ringkanals macht dabei jedoch verhältnismäßig komplizierte Maßnahmen erforderlich.

Dokument DE 1055882 B offenbart einen Abgasturbolader nach dem Oberbegriff des Anspruchs 1.

Ausgehend hiervon liegt der Erfindung die Aufgabe zugrunde, ohne die Notwendigkeit einer aufwändigen Turbinenkonstruktion die jeweiligen Vorteile der Stauaufladung und der Stoßaufladung zu nutzen, um u.a. ein schnelleres Beschleunigungsverhalten des Turboladers und damit einen schnelleren Ladedruckaufbau zu erzielen.

## Offenbarung der Erfindung

Diese Aufgabe wird erfindungsgemäß durch eine röhrenförmige Düse mit veränderlicher Düsengeometrie gelöst, die vorteilhaft unmittelbar vor der Abgasturbine in einem Abgaskrümmer der Brennkraftmaschine oder einem Turbinengehäuse angeordnet ist.

Die Düse ist wie bei einer Pelton-Turbine etwa tangential zum Turbinenrad der Abgasturbine ausgerichtet, wobei ihr Anstellwinkel in Bezug zu den Turbinenschaufeln ebenfalls verstellbar ist.

Eine bevorzugte Ausgestaltung der Erfindung sieht dabei vor, dass der Austrittsquerschnitt der Düse verstellbar ist, um die Strömungsgeschwindigkeit der aus der Düse austretenden, auf die Turbinenschaufeln des Turbinenrades auftreffenden Abgase in Abhängigkeit vom Druck, von der Temperatur und/oder vom Massenstrom der Abgase vor der Düse bzw. hinter der Abgasturbine entweder durch Verkleinerung des Austrittsquerschnitts zu erhöhen oder durch Vergrößerung des Austrittsquerschnitts zu verringern. Der Massenstrom, der Druck und/oder die Temperatur der Abgase vor der Düse und hinter der Abgasturbine werden dabei zweckmäßig mit geeigneten Sensoren erfasst, die mit einer Steuer- oder Regeleinheit verbunden sind, welche die Düsengeometrie über ein geeignetes Stellglied verändert.

Der verstellbare Austrittsquerschnitt der Düse gestattet es, bei kleinen Abgasmassenströmen, zum Beispiel im Teillastbetrieb oder bei niedrigen Drehzahlen der Brennkraftmaschine, durch Verengung des Düsenquerschnitts den Anteil des kinetischen Drucks der Abgase gegenüber dem Anteil des statischen Drucks zu erhöhen, während es umgekehrt bei großen Abgasmassenströmen, zum Beispiel im Volllastbetrieb oder bei hohen Drehzahlen der Brennkraftmaschine, möglich ist, durch Erweiterung des Austrittsquerschnitts, für einen geringen Druckverlust im Bereich der Düse zu sorgen. Durch die Verwendung einer röhrenförmigen Düse kann diese gemäß einer bevorzugten Ausgestaltung der Erfindung zudem ohne konstruktive Änderungen an der Abgasturbine unmittelbar vor dieser im Turbinengehäuse des Turboladers oder in einem Abgaskrümmer der Brennkraftmaschine angeordnet werden.

Zusätzlich kann mindestens ein die Düse umgehender Nebenströmungskanal vorgesehen sein.

In bevorzugter Ausgestaltung der Erfindung wird die Düse mit einem Impulskonverter mit Druckrückgewinnung und einem nachgeschalteten Diffusor kombiniert, wobei vorzugsweise der maximale Austrittsquerschnitt der Düse größer als der Eintrittsquerschnitt der Düse gewählt wird.

## Kurze Beschreibung der Zeichnung

Im folgenden wird die Erfindung anhand eines in der Zeichnung dargestellten Ausführungsbeispiels näher erläutert. Es zeigen:

Fig. 1 eine schematische Darstellung eines Abgasturboladers mit einer unmittelbar vor einer Abgasturbine des Abgasturboladers im Abgastrakt angeordneten Düse mit veränderlichem Düsenaustrittsquerschnitt;

Fig. 2 ein vereinfachtes Enthalpie/Entropie-Diagramm der Abgase beim Hindurchtritt durch einen Teil des Abgastrakts bei unterschiedlichen Düsenaustrittsquerschnitten;

Fig. 3 eine Ansicht entsprechend Fig. 1, jedoch mit einer anderen Düsenanordnung;

Fig. 4 eine Ansicht entsprechend Fig. 1, jedoch mit einer noch anderen Düsenanordnung.

## Ausführungsformen der Erfindung

Die in der Zeichnung dargestellten Abgasturbolader 2 einer Brennkraftmaschine 4 eines Kraftfahrzeugs bestehen im Wesentlichen aus einem in einem Ansaugtrakt 6 der Brennkraftmaschine 4 zwischen einem Lufteinlass 8 bzw. Luftfilter (nicht dargestellt) und einem Saugrohr 10 angeordneten Verdichter 12 und einer in einem Abgastrakt 14 der Brennkraftmaschine 4 zwischen einem Abgaskrümmer 16 und einem Auspuffrohr 18 angeordneten Abgasturbine 20.

Die Abgasturbine 20 besteht in bekannter Weise aus einem Turbinengehäuse 22 und einem drehbar im Turbinengehäuse 22 gelagerten Turbinerad 23, das über eine Abtriebswelle 24 drehfest mit einem Verdichterrad 25 in einem Verdichtergehäuse 26 des Verdichters 12 verbunden ist, so dass das Verdichterrad 25 vom Turbinenrad 23 der von den Abgasen der Brennkraftmaschine 4 durchströmten Abgasturbine 20 angetrieben wird. Die Abgasturbine 20 besitzt einen mit dem Abgaskrümmer 16 verbundenen Einlass 28, der in Verlängerung eines durch den Abgaskrümmer 16 verlaufenden Strömungskanals 30 in tangentialer Richtung des Turbinenrades 23 in das Turbinengehäuse 22 mündet, sowie einen mit dem Auspuffrohr 18 verbundenen Auslass 32, aus dem die Abgase nach dem Hindurchtritt durch die Abgasturbine 20 in axialer Richtung des Turbinenrades 23 aus dem Turbinengehäuse 22 austreten.

Unmittelbar vor dem Einlass 28 der Abgasturbine 20 ist in den Abgaskrümmer 16 eine Düse 34 eingesetzt, mit der sich die Strömungsgeschwindigkeit der aus dem Abgaskrümmer 16 in die Abgasturbine 20 eintretenden Abgase und damit deren Auftreffgeschwindigkeit auf die Turbinenschaufeln des Turbinenrades 23 verändern lässt. Dazu weist die Düse 34 einen verstellbaren Austrittsquerschnitt auf, der mit Hilfe eines Stellorgans 36 in Abhängigkeit vom Abgasmassenstrom durch die Abgasturbine 20 sowie vom Druck und von der Temperatur der Abgase verstellt werden kann, die sich wiederum in Abhängigkeit vom jeweiligen Ist-Betriebszustand der Brennkraftmaschine 4 verändern. Zur Messung des Abgasmassenstroms, des Drucks und der Temperatur der Abgase vor und hinter der Abgasturbine 20 dienen geeignete Sensoren (nicht dargestellt), die vor der Düse 34 im Abgaskrümmer 16 bzw. unmittelbar hinter dem Auslass 32 der Abgasturbine 20 im Abgastrakt 14 angeordnet und mit einer das Stellorgan 36 steuernden Steuer- oder Regeleinheit 38 verbunden sind.

Der Austrittsquerschnitt der Düse 34 kann eine beliebige Form besitzen, wie rund, quadratisch oder oval, sollte sich jedoch ohne großen konstruktiven Aufwand mit einfachen Mitteln verändern lassen. Dazu kann die röhrenförmige Düse 34 beispielsweise mehrere, in Umfangsrichtung nebeneinander angeordnete Segmente (nicht dargestellt) umfassen, die sich austrittsseitig unterschiedlich stark miteinander zu Überlappung bringen lassen, ähnlich wie der verstellbare Turbinenaustritt zum Beispiel bei Kampfflugzeugen, um den Austrittsquerschnitt zu verkleinern oder zu vergrößern.

Die Steuer- oder Regeleinheit 38 umfasst mindestens einen Speicher, in dem der jeweils optimale Düsenaustrittsquerschnitt in Abhängigkeit vom momentanen Abgasmassenstrom, Druck und Temperatur vor und hinter der Abgasturbine 20 sowie ggf. von weiteren Parametern in Form von Kennfeldern, Kennlinien, Tabellen, Speichereinheiten eines neuronalen Netzes oder anderen Speichereinheiten abgelegt ist. Weiter wird der momentane Austrittsquerschnitt der Düse 34 erfasst, um diesen in Abhängigkeit von dem jeweils einzustellenden optimalen Austrittsquerschnitt zu vergrößern oder zu verkleinern. Darüber hinaus können in dem Speicher abgelegte Düsenaustrittsquerschnitte während des Betriebs des Abgasturboladers 2 auch adaptiv erlernt bzw. aktualisiert werden.

Bei den zur Messung des Abgasmassenstroms, des Drucks und der Temperatur vor und hinter der Abgasturbine 20 sowie ggf. weiterer Parameter dienenden Sensoren handelt es sich um an sich bekannte Massenstrommesser, Druck- und Temperatursensoren, deren Aufbau daher nicht näher beschrieben werden soll.

Das zur Veränderung des Austrittsquerschnitts dienende Stellorgan 36 kann von der Steuer- oder Regeleinheit 38 durch Aktivierung eines elektrischen, hydraulischen, pneumatischen, elektromagnetischen oder thermo-mechanischen Antriebs betätigt werden.

Die durch die Düse 34 strömenden Abgase treffen ähnlich wie bei einer Pelton-Turbine tangential auf die Turbinenschaufeln des Turbinenrades 23 der Abgasturbine 20 auf. Je nach Austrittsquerschnitt der Düse 34 besitzen die Abgase dabei eine höhere oder geringere Strömungsgeschwindigkeit, wobei eine Verkleinerung des Austrittsquerschnitts zu einer Erhöhung der Strömungsgeschwindigkeit und eine Vergrößerung des Austrittsquerschnitts zu einer Verringerung der Strömungsgeschwindigkeit führt.

Die jeweilige Strömungsgeschwindigkeit der Abgase hat Auswirkungen auf den Gesamtdruck $p_{tot}$ der Abgase am Einlass 28 der Abgasturbine 20, der sich gemäß

$$p_{tot} = p_{stat} + p_{kin} \qquad\qquad (1)$$

aus der Summe des statischen Drucks $p_{stat}$ und des kinetischen Drucks $p_{kin}$ ergibt, wobei

$$p_{kin} = 1/2\rho c_{aus}^{2} \qquad\qquad (2)$$

$c_{aus}$ ist dabei die Strömungsgeschwindigkeit am Auslass der Düse 34 und p die von der jeweiligen Temperatur und vom jeweiligen Druck abhängige Dichte der Abgase.

Der Wirkungsgrad der Abgasturbine 20 und die von der Abgasturbine 20 an den Verdichter 12 abgegebene Leistung hängt sowohl von $p_{stat}$ und von $p_{kin}$ ab, während der Gesamtdruck $p_{tot}$, der Abgasmassenstrom, der Druck und die Temperatur im Abgaskrümmer 16 vor der Abgasturbine 20 im Wesentlichen vom momentanen Betriebszustand der Brennkraftmaschine 4 abhängig sind. Dabei kann durch Veränderung der Düsengeometrie und damit der Strömungsgeschwindigkeit der Abgase am Auslass der Düse 34 gezielt der Reaktionsgrad der Abgasturbine 20 eingestellt werden, der als Quotient aus der in der Turbine 20 umgesetzten Enthalpie H der Abgase und der insgesamt zur Verfügung stehenden Enthalpie H der Abgase definiert ist.

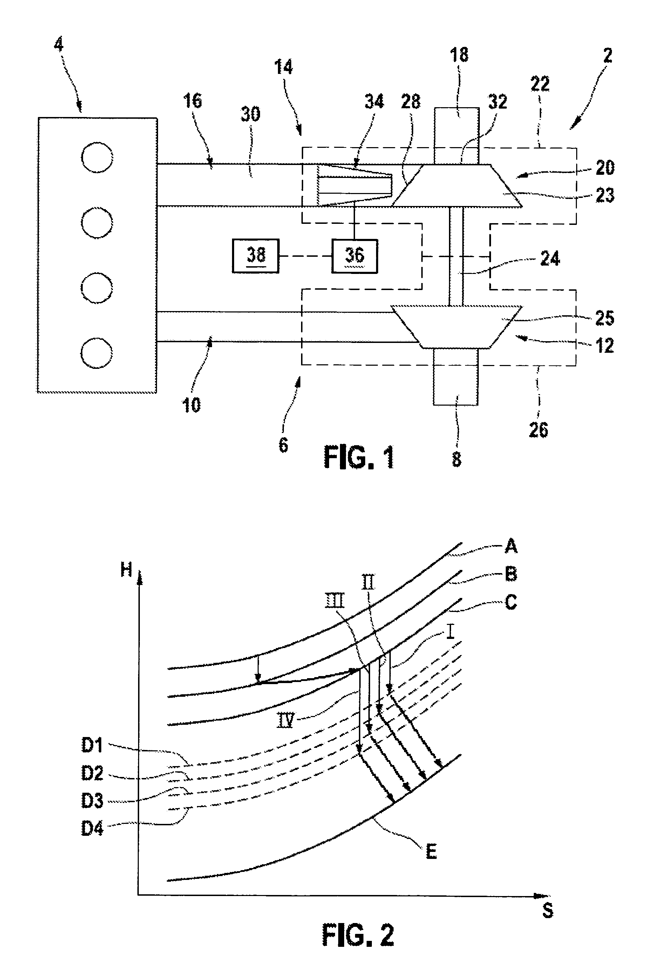

Fig. 2 zeigt anhand eines vereinfachten Enthalpie(H)-Entropie(S)-Diagramms, wie sich das Verhältnis von $p_{stat}$ zu $p_{kin}$ durch Veränderung des Austrittsquerschnitts der Düse 34 verändern lässt.

Wenn sich bei kleinen Abgasmassenströmen, wie zum Beispiel bei Teillast oder bei niedrigen Drehzahlen der Brennkraftmaschine 4, an der Abgasturbine 20 ein relativ niedriges Druckverhältnis ausbildet, wird der Austrittsquerschnitt der Düse 34 verkleinert, um den Anteil von $p_{kin}$ gegenüber $p_{stat}$ zu erhöhen, wie durch die Kurvenschar I bis IV in Fig. 2 dargestellt. Umgekehrt wird bei hohen Abgasmassenströmen, wie zum Beispiel bei Volllast oder bei hohen Drehzahlen der Brennkraftmaschine 4, der Austrittsquerschnitt der Düse 34 so weit wie möglich vergrößert, um den Druckverlust vor der Abgasturbine 20 so gering wie möglich zu halten, wie durch die Kurve I in Fig. 2 dargestellt.

In Fig. 2 bezeichnet die Kurve A den Druck im Zylinder $p_{zyl}$, = const., die Kurve B den Druck vor der Düse $p_{krümmer}$ = const., die Kurve C den gesamten Druck in der Düse $p_{tot}$ = const., die vier in unterbrochenen Linien dargestellten Kurven D1 bis D4 den statischen Druck in der Düse 34 $p_{stat}$ = const. in Abhängigkeit von deren Austrittsquerschnitt und die Kurve E den Druck $p_{aus}$ = const. am Auslass der Turbine 20.

In den Bereichen zwischen den zuvor genannten Vollast- bzw. Teillast-Betriebszuständen der Brennkraftmaschine 4 wird der Austrittsquerschnitt der Düse 34 so eingestellt, dass die Turbine 20 zur Erzielung eines möglichst hohen Wirkungsgrades stets mit einer optimalen Kombination von $p_{stat}$ und $p_{kin}$ beaufschlagt wird. Insbesondere in dynamischen Betriebszuständen kann der Austrittsquerschnitt der Düse 34 kontinuierlich verstellt werden, zum Beispiel mit zunehmendem Abgasmassenstrom oder mit steigender Drehzahl der Brennkraftmaschine 4.

Weiterhin ist der Anstellwinkel der Düse 34 in Bezug zu den Turbinenschaufeln des Turbinenrades in Abhängigkeit von den zuvor genannten Parametern verstellbar.

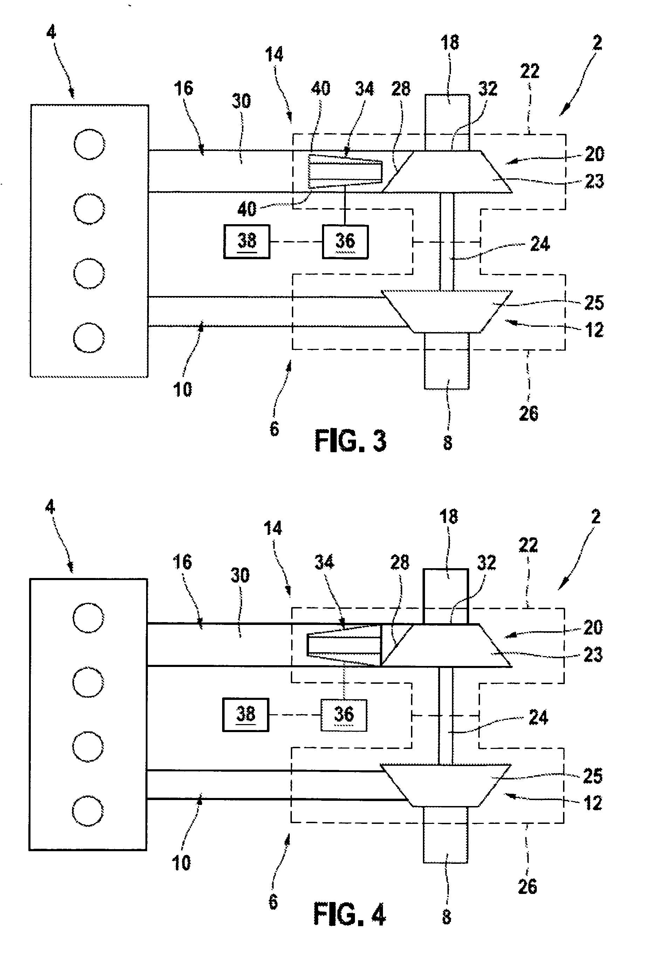

Um eine optimale Einstellung des auf die Brennkraftmaschine 4 zurückwirkenden Abgasgegendrucks der beiden Anteile $p_{stat}$ und $p_{kin}$ des Drucks $p_{tot}$ vor dem Einlass 28 der Abgasturbine 20 zu ermöglichen, kann in einer besonderen Ausführungsform der Erfindung die in Fig. 3 dargestellte Düse 34 zusätzlich mit Nebenströmungskanälen 40 ausgestattet sein, durch die ein Teil der Abgase an der Düse 34 vorbei zum Einlass 28 der Abgasturbine 20 gelangt.

Fig. 4 zeigt schematisch eine weitere besondere Ausführung der Erfindung, in der die Düse 34 mit einem Impuls-Konverter mit Druckrückgewinnung sowie einen nachgeschalteten Diffusor kombiniert ist. Dazu wird der maximaler Austrittsquerschnitt der Düse, d.h. der Austrittsquerschnitt bei maximaler Öffnung der Düse 34 größer als deren Eintrittsquerschnitt gewählt.

Neben diesen Maßnahmen oder an Stelle derselben sind noch weitere Modifikationen oder Verbesserungen möglich:

- Bei Brennkraftmaschinen 4 mit mehreren Zylindern können die Abgaskrümmer einzelner Zylinder entsprechend der Zündfolge der Zylinder zusammengefasst werden, um ein Übersprechverhalten der Abgaskanäle in den Ventilüberschneidungsphasen zu verhindern.

- Bei Brennkraftmaschinen 4 mit variabler Ventilsteuerung können die zuvor beschriebenen Maßnahmen durch eine geeignete Verstellung der Ventilüberschneidungsphase ergänzt werden, um zum Beispiel einen hohen Abgasmassenstrom zu erzeugen oder um die Ladungswechselarbeit der Brennkraftmaschine 4 zu minimieren. Idealerweise wird bei dynamischen Lastunterbrechungen der Brennkraftmaschine 4 in einem Steuergerät der Brennkraftmaschine 4 eine Zündwinkelspäterstellung vorgenommen, um eine verschleppte Verbrennung zu erzielen. In diesem Fall ist die Verbrennung in den Zylindern der Brennkraftmaschine 4 beim Öffnen der Auslassventile noch nicht vollständig abgeschlossen, wodurch im Abgaskrümmer 16 Abgase mit hohem Druck und hoher Temperatur erzeugt werden, die anschließend durch die Düse 34 hindurchtreten.

- Das Kraftstoff-Luft-Verhältnis bei der Verbrennung in den Zylindern der Brennkraftmaschine 4 bzw. der λ-Wert der Abgase kann in geeigneter Weise verändert werden, um für eine unvollständige Verbrennung zu sorgen, so dass mittels einer externen Luftzufuhr (z.B. einer Sekundärluftpumpe) eine Nachreaktion (Nachverbrennung) im Auslasskrümmer gezündet werden kann.

- In den Abgaskrümmer 16 können ein oder mehrere Kraftstoffeinspritzventile (nicht dargestellt) mit oder ohne externe Luftzufuhr eingesetzt sein, um bei geschlossenen Auslassventilen der Brennkraftmaschine 4 unmittelbar vor dem Eintritt in die Düse 34 für eine Nachverbrennung zu sorgen. Durch eine solche Nachverbrennung weist das Abgas einen höheren Energieinhalt auf, so dass es durch die Düse 34 mit einer hohen Strömungsgeschwindigkeit in die Turbine 20 geleitet wird und dort expandiert. Dadurch kann der Abgasturbolader 2 deutlich schneller beschleunigt werden.

- Um möglichst wenig Abgasenergie aufgrund von Wärmeleitung und Wärmeabstrahlung zu verlieren, können der Abgaskrümmer 16 und das Turbinengehäuse 22 luftspaltisoliert bzw. aus Materialien mit schlechter Wärmeleitung ausgeführt sein.

- Die Düse 34 kann im Inneren mit Leitschaufeln versehen sein, die ggf. in Abhängigkeit von den zuvor genannten Parametern verstellbar sind.

- An Stelle einer einzelnen Düse 34 können mehrere radial angeordnete Düsen im Turbinengehäuse 22 vorgesehen werden, deren Steuerung bzw. Regelung in analoger Weise wie bei den zuvor beschriebenen Ausführungsformen erfolgt.

- Auch andere, ggf. in der Brennkraftmaschine 4 vorgesehene Einrichtungen, wie ein Schaltsaugrohr, ein Impulslader usw. zur Resonanz- oder Impulsaufladung oder andere leistungssteigernde Techniken können ohne weiteres mit den hier beschriebenen Maßnahmen kombiniert werden.

**Patentansprüche**

1. Abgasturbolader für eine Brennkraftmaschine (4), mit einem Verdichter (12) im Ansaugtrakt (6), einer hinter einem Abgaskrümmer (16) im Abgastrakt (14) angeordneten, von Abgasen der Brennkraftmaschine (4) durchströmten Abgasturbine (20), die ein mit Turbinenschaufeln versehenes Turbinenrad (23) umfasst, sowie einem in Strömungsrichtung der Abgase vor dem Turbinenrad (23) der Abgasturbine (20) angeordneten Strömungskanal (30), dessen Geometrie veränderbar ist, wobei der Strömungskanal (30) eine röhrenförmige Düse (34) mit veränderlicher Düsengeometrie umfasst, **dadurch gekennzeichnet, dass** die Düse (34) etwa tangential zum Turbinenrad (23) ausgerichtet ist, wobei ein Anstellwinkel der Düse (34) in Bezug zu den Turbinenschaufeln verstellbar ist.

**2.** Abgasturbolader nach Anspruch 1, **dadurch gekennzeichnet, dass** die Düse (34) unmittelbar vor der Abgasturbine (20) in einem Abgaskrümmer (16) der Brennkraftmaschine (4) oder einem Turbinengehäuse (22) angeordnet ist.

**3.** Abgasturbolader nach Anspruch 1 oder 2, **gekennzeichnet durch** Mittel (36, 38) zur Veränderung der Düsengeometrie in Abhängigkeit vom Druck, von der Temperatur und/oder vom Massenstrom der Abgase vor der Düse (34) bzw. hinter der Abgasturbine (20).

**4.** Abgasturbolader nach einem der vorangehenden Ansprüche, **dadurch gekennzeichnet, dass** ein Austrittquerschnitt der Düse (34) verstellbar ist.

**5.** Abgasturbolader nach Anspruch 4, **dadurch gekennzeichnet, dass** die Düse (34) mit einem Impulskonverter mit Druckrückgewinnung und einem nachgeschalteten Diffusor kombiniert ist.

**6.** Abgasturbolader nach einem der Ansprüche 3 bis 5, **dadurch gekennzeichnet, dass** die Mittel (36, 38) zur Veränderung der Düsengeometrie mindestens ein Stellglied (38) zum Verändern des Austrittsquerschnitts und/oder des Anstellwinkels der Düse (34) umfassen.

**7.** Abgasturbolader nach einem der vorangehenden Ansprüche, **gekennzeichnet durch** mindestens einen Sensor zur Erfassung des Massenstroms, des Drucks und/oder der Temperatur der Abgase vor der Düse (34) und hinter der Abgasturbine (20).

**8.** Abgasturbolader nach einem der vorangehenden Ansprüche, **gekennzeichnet durch** mindestens einen die Düse (34) umgehenden Nebenströmungskanal (40).

**9.** Abgasturbolader nach einem der vorangehenden Ansprüche, **gekennzeichnet durch** mindestens ein vor der Düse (34) im Abgaskrümmer (16) angeordnetes Einspritzventil.

**10.** Verfahren zum Betreiben eines Abgasturboladers nach einem der vorangehenden Ansprüche, **dadurch gekennzeichnet, dass** die Düsengeometrie der Düse (34) in Abhängigkeit vom Massenstrom, vom Druck und/oder von der Temperatur der Abgase vor der Düse (34) und hinter der Abgasturbine (20) verändert wird.

**11.** Verfahren nach Anspruch 10, **dadurch gekennzeichnet, dass** ein Austrittsquerschnitt der Düse (34) bei Teillast oder bei niedrigen Drehzahlen der Brennkraftmaschine (4) verkleinert wird, und dass bei Volllast oder bei hohen Drehzahlen der Brennkraftmaschine (4) ein maximaler Austrittsquerschnitt der Düse (34) eingestellt wird.

**12.** Verfahren nach Anspruch 11, **dadurch gekennzeichnet, dass** die Düsengeometrie in dynamischen Betriebszuständen zwischen Teillast und Volllast kontinuierlich verändert wird.

**Claims**

**1.** Exhaust gas turbocharger for an internal combustion engine (4) containing a gas compressor (12) in the intake duct (6), an exhaust gas turbine (20) arranged behind an exhaust manifold (16) in the exhaust gas system (14) through which flow the exhaust gases of the internal combustion engine (4), wherein the exhaust gas turbine contains a turbine wheel (23) with turbine blades as well as a flow channel (30) whose geometry is changeable, arranged in front of the turbine wheel (23) of the exhaust gas turbine (20) in flow direction of the exhaust gases, wherein the flow channel (30) contains a tubular nozzle (34) with a changing geometry of the nozzle, **characterized in that** the nozzle (34) is roughly oriented tangentially to the turbine wheel (23), wherein an angle of stall of the nozzle (34) in reference to the turbine blades is adjustable.

**2.** Exhaust gas turbocharger according to claim 1, **characterized in that** the nozzle (34) is arranged directly in front of the exhaust gas turbine (20) in an exhaust manifold (16) of the internal combustion engine (4) or a turbine housing (22).

**3.** Exhaust gas turbocharger according to claim 1 or 2, **characterized by** means (36, 38) to modify the geometry of the nozzle depending on pressure, temperature and/or mass flow of the exhaust gases in front of the nozzle (34) or behind the exhaust gas turbine (20).

4. Exhaust gas turbocharger according to one of the preceding claims **characterized in that** an outlet cross section of the nozzle (34) is adjustable.

5. Exhaust gas turbocharger according to claim 4, **characterized in that** the nozzle (34) is combined with a pulse converter with pressure recovery and a diffuser installed downstream.

6. Exhaust gas turbocharger according to one of the claims 3 to 5, **characterized in that** the means (36, 38) to modify the geometry of the nozzle contain at least one actuator (38) to modify the outlet cross section and/or the angle of stall of the nozzle (34).

7. Exhaust gas turbocharger according to one of the preceding claims, **characterized in** containing at least one sensor to detect the mass flow, the pressure and/or the temperature of the exhaust gases in front of the nozzle (34) and behind the exhaust gas turbine (20).

8. Exhaust gas turbocharger according to one of the preceding claims, **characterized by** at least one side flux channel (40) avoiding the nozzle (34).

9. Exhaust gas turbocharger according to one of the preceding claims, **characterized by** at least one injector arranged in front of the nozzle (34) in the exhaust manifold (16).

10. Method to operate an exhaust gas turbocharger according to one of the preceding claims, **characterized in that** the geometry of the nozzle of the nozzle (34) is modified depending on the mass flow, the pressure and/or the temperature of the exhaust gases in front of the nozzle (34) and behind the exhaust gas turbine (20).

11. Method according to claim 10, **characterized in that** an outlet cross section of the nozzle (34) is reduced at part load or at low rotational speeds of the internal combustion engine (4), and **in that** at full load or high rotational speeds of the internal combustion engine (4), a maximum outlet cross section of the nozzle (34) is set.

12. Method according to claim 11, **characterized in that** the geometry of the nozzle is continually modified in dynamic operating modes between part load and full load.


**Revendications**

1. Turbocompresseur à gaz d'échappement pour un moteur à combustion interne (4), contenant un compresseur (12) dans le conduit d'admission (6), une turbine de gaz d'échappement (20), arrangée derrière un collecteur de gaz d'échappement (16) dans le système d'échappement (14), traversée par le gaz d'échappement du moteur à combustion interne (4), et contenant une roue de turbine (23) avec des pales de turbine ainsi qu'un canal de flux (30) dont la géométrie est modifiable, arrangé devant la roue de turbine (23) de la turbine de gaz d'échappement (20) dans la direction de flux du gaz d'échappement, dans lequel le canal de flux (30) contient une tuyère tubulaire (34) avec une géométrie de la tuyère modifiable, **caractérisé en ce que** la tuyère (34) est orientée à peu près tangentiellement par rapport à la roue de turbine (23), dans lequel un angle de calage de la tuyère (34) est modifiable en référence aux pales de turbine.

2. Turbocompresseur à gaz d'échappement selon revendication 1, **caractérisé en ce que** la tuyère (34) est arrangée directement devant la turbine de gaz d'échappement (20) dans un collecteur de gaz d'échappement (16) du moteur à combustion interne (4) ou dans un logement de turbine (22).

3. Turbocompresseur à gaz d'échappement selon revendication 1 ou 2, **caractérisé par** des moyens (36, 38) pour modifier la géométrie de la tuyère dépendant de la pression, de la température et/ou du flux de masse des gaz d'échappement devant la tuyère (34) respectivement derrière la turbine de gaz d'échappement (20).

4. Turbocompresseur à gaz d'échappement selon une des revendications précédentes, **caractérisé en ce qu'**une section transversale de sortie de la tuyère (34) est modifiable.

5. Turbocompresseur à gaz d'échappement selon revendication 4, **caractérisé en ce que** la tuyère (34) est combinée avec un convertisseur d'impulsions avec récupération de la pression et un diffuseur installé en aval.

6. Turbocompresseur à gaz d'échappement selon une des revendications 3 à 5, **caractérisé en ce que** le moyens (36, 38) pour modifier la géométrie de la tuyère contiennent au moins un actionneur (38) pour modifier la section transversale de sortie et/ou l'angle de calage de la tuyère (34).

7. Turbocompresseur à gaz d'échappement selon une des revendications précédentes, **caractérisé par** au moins un sensor pour détecter le flux de masse, la pression et/ou la température des gaz d'échappement devant la tuyère (34) et derrière la turbine d'échappement (20).

8. Turbocompresseur à gaz d'échappement selon une des revendications précédentes, **caractérisé par** au moins un canal de flux secondaire (40) qui évite la tuyère (34).

9. Turbocompresseur à gaz d'échappement selon une des revendications précédentes, **caractérisé par** au moins un gicleur d'injection arrangé devant la tuyère (34) dans le collecteur de gaz d'échappement (16).

10. Méthode pour actionner un turbocompresseur selon une des revendications précédentes, **caractérisé en ce que** la géométrie de la tuyère de la tuyère (34) est changée dépendant du flux de masse, de la pression et/ou de la température des gaz d'échappement devant la tuyère (34) et derrière la turbine de gaz d'échappement (20).

11. Méthode selon révendication 10, **caractérisée en ce qu'**une section transversale de sortie de la tuyère (34) est réduite, en charge partielle ou à une basse vitesse de rotation du moteur à combustion interne (4), et **en ce qu'**à pleine charge ou à une vitesse de rotation élévée du moteur de combustion interne (4), une section transversale de sortie maximale de la tuyère (34) est conditionnée.

12. Méthode selon revendication 11, **caractérisée en ce que** la géométrie de la tuyère est modifiée continûment dans des états de fonctionnement dynamiques entre charge partielle et pleine charge.

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0160460 B1

- DE 1055882 B